# EUROPEAN PATENT APPLICATION

(11) **EP 1 755 137 A1**
(43) Date of publication of application: **21.02.2007**
(21) Application number: 05107605.7
(22) Date of filing: 18.08.2005
(51) Int. Cl.: H01J 9/02

(54) **A method of forming a carbon nanotube emitter, carbon nanotube emitter with applications in nano-printing and use thereof**

(71) Applicant: University of Teheran, Teheran (IR)
(72) Inventor: Mohajerzadeh, Shamsoddidn, North Kagar Ave,Univ. of Tehran,Tehran (IR); Yaser, Abdi, North Kargar Ave Tehran (IR); Hadi, Hosseinzadegan Univ. of Tehran, North Kargar Ave Tehran (IR); Javad, Koohsorkhi, Teheran (IR)
(74) Representative: Blasberg, Tilo

(57) **Abstract**

The invention relates to a method of forming a carbon nanotube (CNT) emitter, comprising the steps of:
providing a substrate (1), in particular a semiconductor substrate;
disposing at least one CNT (2) on said substrate;
depositing an insulating layer (3) on said substrate such as to encapsulate a respective CNT; and
connecting said substrate (1) with a source of charged particles for emission of charged particles via a respective CNT.

The encapsulation of the CNTs allows the formation of sharp beams of charged particles, e.g. of electrons, from the CNTs. The emitted charged particles are travelling through a partially hollow medium with insulating boundaries and therefore emerge as a sharp beam of charged particles without the need of additional focussing lenses for focussing the beam of charged particles.

Potential applications are direct-write photolithography in the nanoscale regime, field emission displays (FED), scanning tunnelling microscopy (STM) or transmission electron microscopy (TEM).

## Description

### FIELD OF INVENTION

The present inventions relates in general to the production of structures comprising carbon nanotubes. More particularly, the present invention relates to carbon nanotube emitters for emission of charged particles like electrons or ions for applications such as field emission display devices (FED), scanning tunnelling microscopy or transmission electron microscopy (TEM) or for modifying surface properties of a substrate, in particular of a substrate coated with a photoresist. Other aspects of the present invention relate to a method of forming such a carbon nanotube emitter and to applications using such a carbon nanotube emitter.

### BACKGROUND OF INVENTION

Sharp tips formed in silicon or related materials are extensively used as probes in atomic force or scanning tunnelling microscopy (STM) applications. US patents 5,363,697, 5,372,930, 6,867,443 B2, 5,696,491, 6,136,208, 6,189,374 B1, 6,218,086 B1, 6,279,389 B1, 6,416,476 B1, 6,507,478 B1, 6,574,499 B1, 6,590,208 B2, US 5,666,190 and US 5,866,807 can be mentioned as examples.

Such probes are also extensively used in mass-storage applications by modifying surface properties of a substrate on a nanometer scale. As an example, US 5,835,477 can be mentioned, which discloses a storage device comprising a local probe array disposed opposite to the storage medium such that the probe array is scanned over a corresponding storage field for writing information onto the storage medium or reading information.

It is also known to use such sharp tips for direct-write nanolithography. As an example US 6,635,311 B1 discloses the use of a nanoscopic tip coated with a patterning compound. The tip is contacted with a substrate so that the patterning compound is delivered to the substrate in order to produce a desired pattern in submicrometer dimensions. Such a method is used for fabrication of nanoscale structures.

Field emission displays (hereinafter FEDs) are becoming more and more popular as display devices exhibiting high luminosity at low power consumption. An FED is a display device in which electrons are emitted from a field emitter arranged at regular intervals on a cathode electrode by forming a strong electric field between the field emitter and a gate electrode. The emitted electrons impinge on a fluorescent or phosphorescent material of an opposite anode electrode which causes emission of light used for displaying information.

In such FED applications a micro-tip formed of a metal such as Molybdenum (Mo) is widely used as the field emitter. Also use of carbon nanotubes (hereinafter also CNTs) is well known. CNTs are very small tube-shaped structures having the composition of a graphite sheet rolled in a tube. CNTs are electrically conductive along their length, are chemically stable and can have very small diameters (much less than 100 nm) and large aspect ratios (length/diameter).

It is expected that a FED using CNT emitters will exhibit advantageous features including wide viewing angle, high resolution, low power consumption and temperature stability. Accordingly, it is considered using FEDs based on CNT emitters as display devices in equipments such as personal computers, Personal Digital Assistants (PDAs), medical apparatus or HDTV. It can also be used as a backlight for an LCD.

US 2004/0189182 A1 discloses a CNT-based FED including a cathode electrode, an anode electrode, a gate electrode arranged between the cathode electrode and the anode electrode, a CNT array electrically connected to the cathode electrode at a first end and a spacer insulatively separating the gate electrode from the cathode electrode. A second opposite end of the CNT array is flush with a top end of the spacer. An intermediate layer having a precisely controllable thickness is disposed between the gate electrode and the spacer in order to precisely control the distance between the gate electrode and the CNT array.

CNT arrays are formed within trough-shaped spaces formed in the spacer by conventional chemical vapour deposition (CVD) techniques. The bottom of these spaces is formed by a protective layer, which is formed on the top surface of a substrate. Exposing the free ends of the CNTs for emission requires removing both the substrate and the protective layer at subsequent process steps, which is difficult and might harm the free ends of the CNTs, causing an undesired variation of the electrical and emission characteristics of the CNTs.

US 2005/0112983 A1 discloses a method of forming CNT emitters and of manufacturing an FED. A CNT layer is formed on a substrate on which are formed a plurality of electrodes. A photoresist is coated on the CNT layer. The photoresist layer is patterned using photo-lithography such that the photoresist remains only above the electrodes. Then an exposed portion of the CNT layer is removed by etching using the patterned photoresist as an etch mask. Finally, the photoresist pattern is removed so that the CNT emitters remain on the electrodes at predetermined locations.

Lifting off the patterned photoresist from the CNT layer is difficult and might harm the free ends of the CNTs, causing an undesired variation of the electrical and emission characteristics of the CNTs.

Accordingly, there exists a need to manufacture at low costs CNT emitters having constant, predictable characteristics. As such, the distance between gate electrodes used to control emission of electrons and CNTs used as emitters should be kept uniformly constant over large display areas. In particular, this requires a constant height of the CNTs of large areas.

### SUMMARY OF INVENTION

It is an object of the present invention to provide a method for forming a CNT emitter enabling the formation of CNT emitters having constant, predictable characteristics. According to another object of the present invention there is to be provided a CNT emitter. Further aspects of the present invention relate to the use of such CNT emitters in applications such a modifying surface properties on the nanometer scale, FEDs and microscopy.

The above and further related objects are solved by a method according to claim 1, by a CNT emitter according to claim 7, by a method according to claim 16 and by devices according to claim 17 or 18. Further advantageous embodiments are the subject-matter of the dependent claims.

According to a first aspect of the present invention there is provided a method of forming a CNT emitter, comprising the steps of: providing a semiconductor substrate; disposing at least one CNT on said substrate; depositing an insulating layer on said substrate such as to encapsulate a respective carbon nanotube; and connecting said substrate with a source of charged particles for emission of charged particles via a respective carbon nanotube.

The encapsulation of the CNT, which acts as the emitter of charged particles such as electrons enables the formation of a sharp beam of charged particles from the encapsulated nanotube electrode. More specifically, the insulating layer prevents the emission of charged particles from other locations besides the front end of the CNTs, which results in the emission of a sharp and well defined beam of charged particles. Since the emitted charged particles from the nanotubes are travelling through a partially hollow medium with insulating boundaries, they are physically limited by the inner walls of the respective nanotube. Accordingly, the charged particles exit from the front end of the nanotubes in the form of a beam of charged particles with no need to extra lenses for focussing the beam of charged particles. According to the present invention, such a focussed beam of charged particles can be used in manifold applications, like writing structures in the nanoscale regime, in particular lithography in the nanoscale regime, field emission displays, transmission electron microscopy and the like.

The insulating layer can be deposited with high precision and uniform thickness. Thus, the insulating layer can be used as a spacer of uniform, precise thickness, so that the front ends of the CNTs can be disposed at a constant and predetermined distance with respect to another substrate, such as a display in FED applications. Thus, a uniform illuminance can be achieved according to the present invention.

Of course, there can also be provided a plurality of CNTs that may be arranged in a matrix configuration, e.g. for FED applications, or that can also be arranged in a random or arbitrary other configuration.

According to another embodiment of the present invention, the substrate is a silicon substrate, which has the advantage of ease of processing. Of course, other types of substrates can also be used according to the present invention, including but not limiting the present invention: Germanium, GaAs hetero-semiconductor substrates. If the growth temperature for growing the CNTs is below approx. 500°C, also other types of substrates may be used, in particular insulating substrates such as ordinary soda-lime glass substrates, which are most suitable for large area display applications, or arbitrary other types of glasses.

The insulating layer can be deposited utilizing arbitrary methods of uniformly depositing an insulating layer, including but not limiting the present invention: CVD, PECVD, sputtering, liquid-phase deposition (LPD) and the like.

According to another embodiment of the present invention, the method further comprises the step of smoothing or polishing a surface of said insulating layer. Thus, a uniform thickness of the insulating layer and hence of the CNTs can be accomplished easily. According to another embodiment of the present invention the method further comprises the step of forming recessions in said insulating layer in the sites of said carbon nanotubes. The recessions result in an even sharper and more controllable formation of beams of charged particles, e.g. electron beams.

According to another embodiment of the present invention the step of disposing said at least one carbon nanotube comprises the steps of: depositing a metallic layer on a surface of said substrate; patterning said metallic layer as to form discrete metallic portions on said surface; and disposing a plurality of carbon nanotubes on said discrete metallic portions. Accordingly, the metallic layer or portion is used as a seed layer for initiating the controlled and predictable growth of CNTs on the substrate. Patterning can be accomplished utilizing photolithography techniques, such as patterning a photoresist, washing the photoresist, depositing a metallic layer on the surface of the substrate and lifting off the metallic layer on all portions besides those resulting from patterned surface portions. Thus, patterning enables a precise control over the positioning of the single CNTs or CNT clusters or arrays on the surface of the substrate.

According to another embodiment of the present invention the step of depositing said insulating layer comprises depositing a double-layer consisting of a metal layer and an insulator layer and depositing at least another double-layer on said double-layer, said another double-layer respectively consisting of a metal layer and an insulator layer. The presence of the outer metal layer surrounding the whole structure acts as an integrated electrostatic lens which acts as a controller of the emission of charged particles, such as electrons. Accordingly, a focusing facility can be integrated into the CNT emitter structure.

According to another embodiment of the present invention the step of using said CNT emitter to pattern a metallic layer on a surface of another semiconductor substrate and said steps of (a) disposing a plurality of carbon nanotubes on said discrete metallic portions, (b) encapsulating said carbon nanotubes as to form another carbon nanotube emitter and (c) using said another carbon nanotube emitter to pattern a metallic layer on a surface of another semiconductor substrate are repeated for reducing the number of carbon nanotubes disposed on said discrete metallic portions or even for singulating CNTs.

Thus, a CNT emitter formed in a first stage of the process is used as a writing element for patterning a metallic layer deposited on the surface of another substrate in a nanometer regime. Afterwards, a CNT emitter is formed on the surface of the other substrate, which is again used as a CNT emitter or writing element for patterning a metallic layer deposited on the surface of still another substrate. This cycle is repeated for reducing the total number of CNTs deposited on a respective metallic portion until a desired number of CNTs is deposited on a respective metallic portion. This desired number can be one (single, isolated CNT vertically aligned) or larger than one (e.g. a cluster of CNTs is deposited on a respective metallic portion).

Another aspect of the present invention is directed to a CNT emitter having the structure as outlined above. More specifically, the CNT emitter according to this aspect of the present invention comprises a semiconductor substrate; and at least one carbon nanotube disposed on said substrate and having a free end adapted for emission of charged particles therefrom; wherein an insulating layer is provided for encapsulating said at least one carbon nanotube.

According to another embodiment, the CNT emitter further comprises at least one gate for controlling emission of charged particles via said CNTs. Thus, a controllable source of charged particles, such as electrons, can be achieved, which is a precondition for implementing electronic applications, such as FED applications, data storage, writing with charged particles in photolithography and the like.

According to another embodiment of the present invention a cavity is formed underneath said at least one carbon nanotube, said cavity communicating with a reservoir of particles in a fluid or gaseous phase, wherein an ionization means is disposed within said cavity for ionizing said particles to be emitted from a respective free end of said carbon nanotubes. Thus, also particles other than electrons can be emitted via the CNTs. A preferred exemplary embodiment according to the present invention uses hydrogen ions, although the present invention is not limited to emission of electrons or hydrogen ions. The reservoir may be implement unitary with the CNT emitter structure are can be disposed spaced apart from the CNT emitter structure but connected with the CNT emitter structure via a tube-like structure for guiding the fluid or gas towards the cavity. The ionization means can be any suitable electrode configuration, more specifically any suitable heating electrode or plasma electrode configuration, for rapidly ionizing the fluid or gas within the cavity. Such electrode configurations are well known to the person skilled in the art, e.g. from plasma sources.

Another aspect of the present invention relates to a method of modifying properties of a surface of a substrate, wherein a carbon nanotube emitter as outlined above is used to emit charged particles, e.g. electrons or hydrogen ions, causing a modification of said surface properties. For example, the surface can be coated with a photoresist, which is exposed by the charged particle beam emitted via the CNT. Standard processing of the exposed photoresist, which is well known from photolithography, results in a modified surface, in particular in a structured or patterned surface. Of course, the beam of charged particles can also be used for directly modifying the surface properties, e.g. by modifying the crystal structure of a substrate material directly on the surface thereof or by varying surface stress or tension of a substrate caused by direct interaction of the charged particles with the substrate surface.

Another aspect of the present invention relates to providing a field emission display (FED) comprising a CNT emitter as outlined above for emitting charged particles, e.g. electrons or hydrogen ions, onto phosphorescent pixel elements of a display screen. Preferably, the CNTs are disposed in a periodic configuration, e.g. in a matrix configuration, on the surface of a substrate. Corresponding gates are used to switch on/off emission of charged particles via the respective single CNT or cluster of CNTs. A display panel is disposed opposite to the substrate. The display panel is coated with a fluorescent or phosphorescent layer causing emission of coloured light if charged particles that are emitted by the oppositely disposed CNT or cluster of CNTs impinge on the fluorescent or phosphorescent layer. Thus, a grey-scale or color FED can be implemented.

Another aspect of the present invention relates to using a CNT emitter as outlined above for scanning tunnelling microscopy (STM) or transmission electron microscopy (TEM). More specifically, the highly focussed beam of electrons that can be generated according to the present invention can be used for the above mentioned applications in microscopy.

### BRIEF DESCRIPTION OF THE DRAWINGS

Hereinafter the invention will be described in exemplary manner and with reference to the accompanying drawings, from which further features, advantages and objects will become apparent to a person skilled in the art and wherein:
- Fig. 1a and 1b: show a carbon nanotube emitter according to a first embodiment of the present invention;
- Fig. 2a and 2b: show a carbon nanotube emitter according to a second embodiment of the present invention during formation and in use;
- Fig. 3a to 3d: summarize the steps of an exemplary process for forming the carbon nanotube emitter according to the first embodiment of the present invention;
- Fig. 4a to 4d: summarize the steps of an exemplary process for forming a carbon nanotube emitter according to another embodiment of the present invention;
- Fig. 5a to 5h: summarize the steps of an exemplary process for forming a carbon nanotube emitter according to another embodiment of the present invention;
- Fig. 6a and 6b: summarize the electrical characteristics of a carbon nanotube emitter according to the present invention;
- Fig. 7a to 7d: show SEM images of a process for forming a carbon nanotube emitter according to the present invention;
- Fig. 8a to 8f: show SEM images of another process for forming a carbon nanotube emitter according to the present invention;
- Fig. 9a to 9d: show SEM images of the formation of a carbon nanotube emitter according to another embodiment of the present invention using patterned metallic seed layers and standard photolithography;
- Fig. 10a and 10b: show the evolution of multiple lines on a resist coated substrate as a result of the exposure of the randomly prepared nanotube sample to the resist coated substrate;
- Fig. 11: show SEM images of a process used for singulating carbon nanotubes of a method according to another embodiment according to the present invention; and
- Fig. 12a to 12c: show lines generated on a resist coated substrate using the carbon nanotube emitter according to the second embodiment of the present invention.

Throughout the drawings identical reference numerals relate to identical or substantially identical or equivalent structures, elements or means.

### DETAILED DESCRIPTION OF EXMPLARY EMBODIMENTS

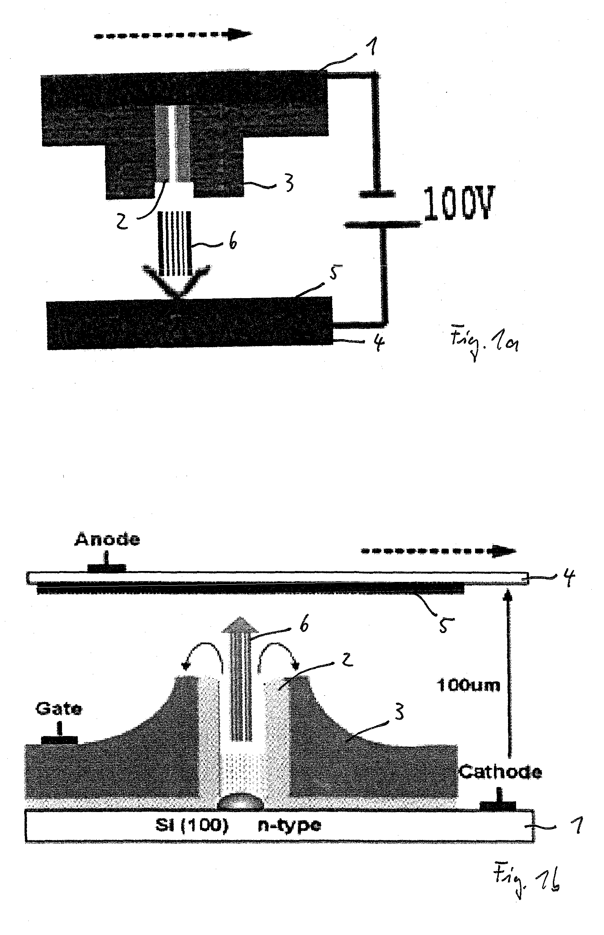

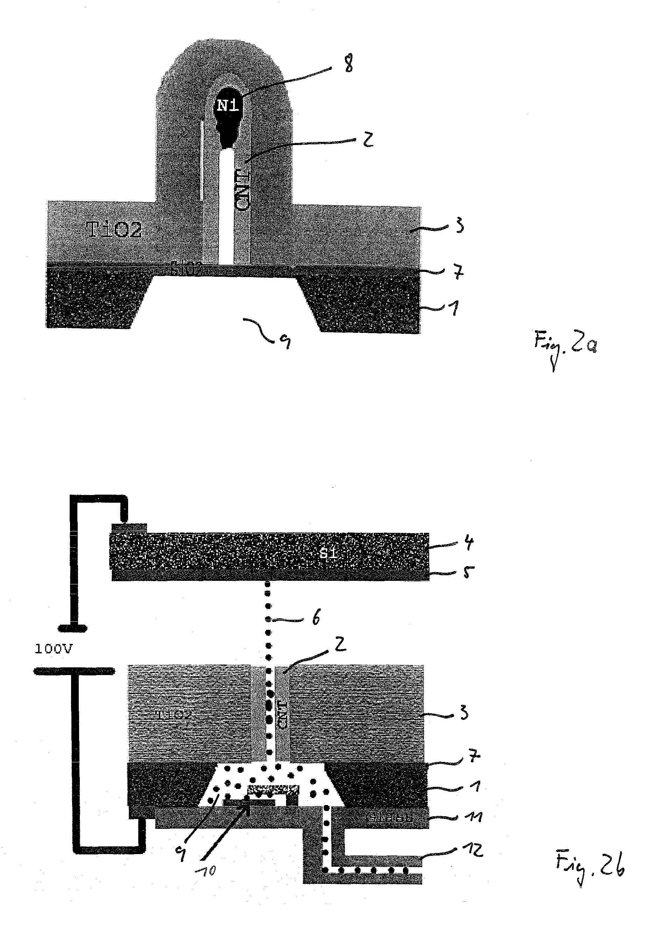

Fig. 1a shows a CNT emitter according to a first embodiment of the present invention. Referring to Fig. 1a the emitter comprises a single, vertically aligned carbon nanotube (CNT) 2 disposed on the surface of a silicon substrate 1. The CNT 2 is encapsulated by an insulating layer 3 of TiO₂, which covers the surface of the substrate 1 surrounding the CNT 2 and which covers the circumferential side wall or outer surface of the CNT 2 such that a free end of CNT 2, opposite to the end disposed on or connected with the surface of the substrate 1, is exposed. Thus, electrons can tunnel through the CNT 2 and be emitted from the free end of CNT 2.

More specifically, as shown in Fig. 1a a shallow recession of a predetermined depth substantially smaller than the length of CNT 2 is formed in the insulating layer 3 at the site of CNT 2. Thus, the front end of CNT 2 does not extend beyond the plane spanned by the insulating layer 3. The depth of the recession is determined by certain process parameters, as will be described in more detail below. The width of the CNTs can vary between 20nm and 120nm. The length of the CNTs depends inter alia on the duration of the growth process and has been set, in an exemplary embodiment, between 1nm and 5nm. The thickness of the TiO₂-layer is typically around 0.1 µm to 0.2 µm.

The CNT emitter shown in Fig. 1a can be used to modify surface properties in the following manner: as shown in Fig. 1a, opposite to the CNT emitter there is disposed a substrate 4, e.g. a glass or semiconductor substrate, such as a silicon substrate, having a photoresist layer 5 coated on the surface of the substrate 4. The substrate 1 of the CNT emitter is connected to a negative voltage of a power supply and acts as a cathode electrode. On the other hand, the substrate 4 is connected to the positive voltage of the power supply and acts as an anode electrode. Thus, an electric field is established between the CNT emitter and the substrate 4 to be modified. A narrow gap is established between the CNT emitter and substrate 4 such that the electric field enables field emission of electrons from the front end of CNT 2 towards the opposite substrate 4, as indicated by arrow 6. Electrons impinging on the photoresist 5 will alter the properties of the photoresist, as is well known in this field, resulting in a photolithography process on the scale of just a few nanometers. Further processing of the photoresist 5 in the conventional manner will result in a patterned photoresist 5, which can be used to produce structures such as semiconductor or micro-electromechanical (MEMS) structures.

As indicated by the horizontal arrow in Fig. 1a, the substrate 1 and/or substrate 4 can be coupled with a one- or two-dimensional positioning stage to cause a relative movement of substrate 1 and substrate 4 for generating one- or two-dimensional patterns in the photoresist layer 5 by relative movement during the exposure of the photoresist.

Fig. 1b shows another embodiment of a CNT emitter, including a gate electrode Gate disposed adjacent to the single CNT 2 for controlling the emission of electrons from the front end of CNT 2 by applying a suitable gate voltage to the gate electrode Gate.

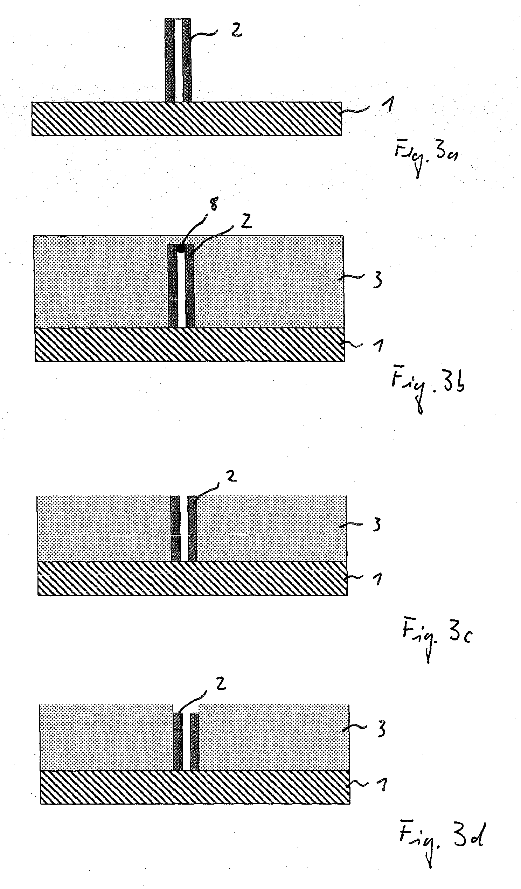

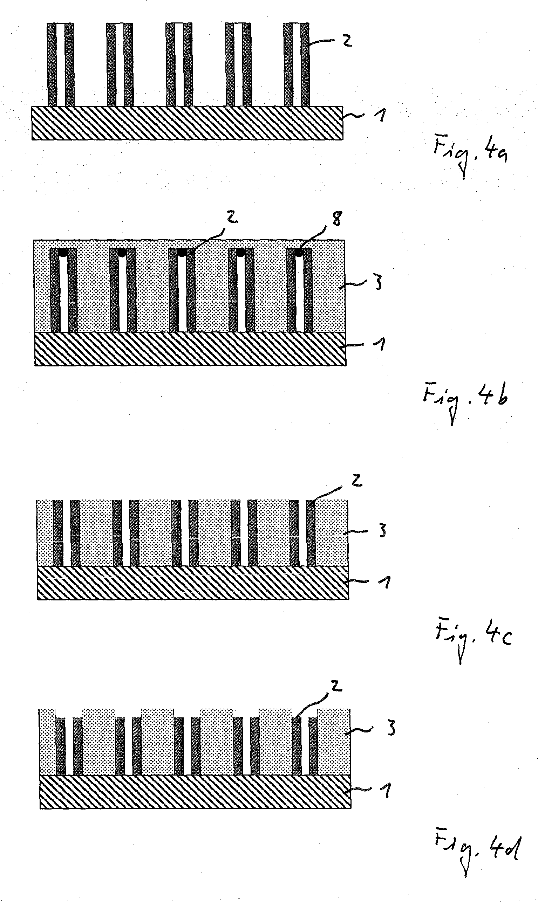

As will become apparent to a person skilled in the art, of course also a plurality of single, isolated vertically aligned CNTs can be disposed on the surface of the semiconductor substrate 1. Thus, the CNT emitter according to the present invention is substantially-based on the suitable formation of single CNTs or suitable CNT arrays or clusters on a substrate surface. With reference to Fig. 3a-5h suitable processes for formation of CNT emitters according to the present invention will be explained below.

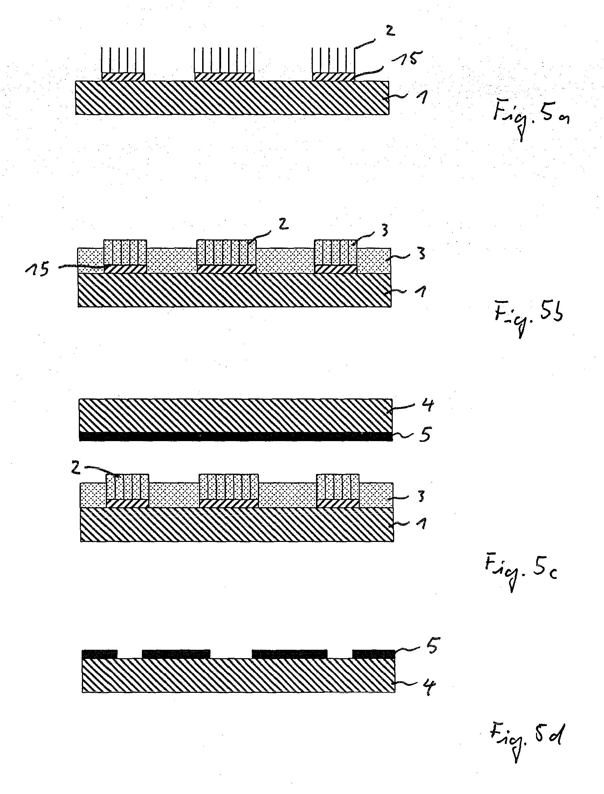

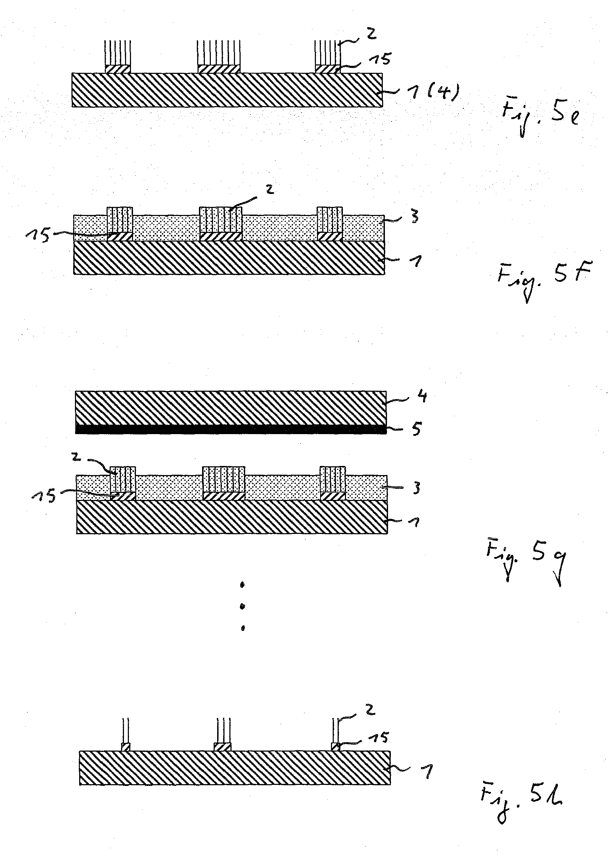

Referring to Fig. 3a, a single CNT 2 is provided on the surface of substrate 1. Creation of single, isolated CNTs will be described in more detail with reference to Fig. 5a to 5h, although the present invention is not limited to these methods as described below.

As shown in Fig. 3b an insulating layer 3 is deposited on the surface of substrate 1 such as to cover the entire surface surrounding the single, isolated CNT 2 and encapsulating the CNT 2 including the front end thereof. More specifically, as indicated in Fig. 3b, according to a method according to another embodiment of the preset invention a tiny stopper 8 of Ni is disposed at the front end of CNT 2 to prevent intimate contact of the front end of CNT 2 with the material of insulating layer 3 before depositing the insulating layer 3.

Exemplary process parameters are as follows: a (100) N-type silicon substrate was cleaned using standard RCA#1 solution and blow-dried. The cleaned samples were then placed in a vacuum coating system, e.g. a CVD reactor, to deposit a 5-10nm thick layer of nickel as the seed for the subsequent steps using e-beam evaporation. After unloading the sample, they were placed in a DC-PECVD reactor to grow carbon nanotubes. Just prior to the growth, the samples were exposed to a 30sccm flow of hydrogen for a 15mins pre-growth annealing step. This step was performed in the presence of a DC plasma with a power density of 4.5W/cm² and at a pressure and temperature of 1.6torr and 650°C, respectively. The growth of CNT's is then achieved by introducing 5seem acetylene into the reactor while pressure and temperature were maintained at previous values.

According to a preferred embodiment the insulating layer 3 is a TiO₂-layer, possible alternative materials for the insulating layer are as follows: SiO₂, Al₂O₃ or even insulating polymers can be used. After depositing the insulating layer a polishing step is performed for polishing the surface of the insulating layer until the free end of CNT 2 is exposed and substantially flush with the surface of the insulating layer 3, as shown in Fig. 3c.

As a next step an RF plasma ashing process is performed for forming recessions in the surface of the insulating layer 3 at the sites of the CNTs 2. As shown schematically in Fig. 3d, the depth of the recession is substantially smaller then the length of CNT 2. Thus, the plasma ashing under an oxygen atmosphere will clean up and partially burn the exposed carbon tips. By controlling parameters of the ashing process such as the rf-power, process time of the ashing step and the like the depth of the recession can be finely and predictably tuned, which has an influence on the total length of the CNTs and on the geometry of the arrangement of the free ends of the CNTs.

The substrate 1 is then connected with a power or voltage supply (not shown) to complete the single CNT emitter as shown in Fig. 3d.

Fig. 4a-4d summarize a similar process for the formation of a CNT emitter comprising a plurality of CNTs 2 disposed at regular or irregular intervals in one or two dimensions on top of the surface of substrate 1. As shown in Fig. 4d, the insulating layer 3 substantially fills out the entire space between two adjacent CNTs 2 such as to form a homogeneous substantially unitary insulating layer on the surface of substrate 1. Thus, according to the present invention deposition of the insulating layer 3 leads to a conformal coverage of the sides and tips of all CNTs 2. Deposition of the insulating layer is achieved e.g. using a mixture of TiCl₄ and O₂ at a temperature of 220°C and in an atmospheric pressure. The plasma ashing process is performed e.g. in a mixture of Ar/O₂ with an RF power of 100W for 10mins.

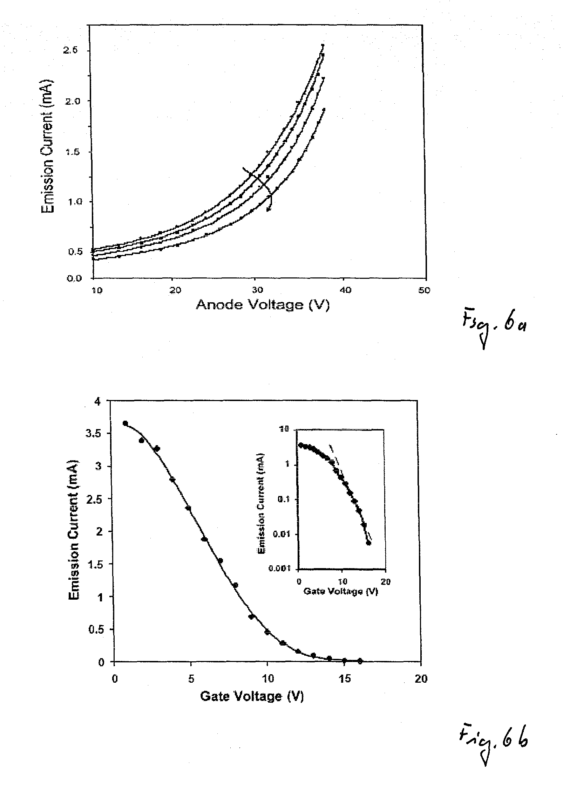

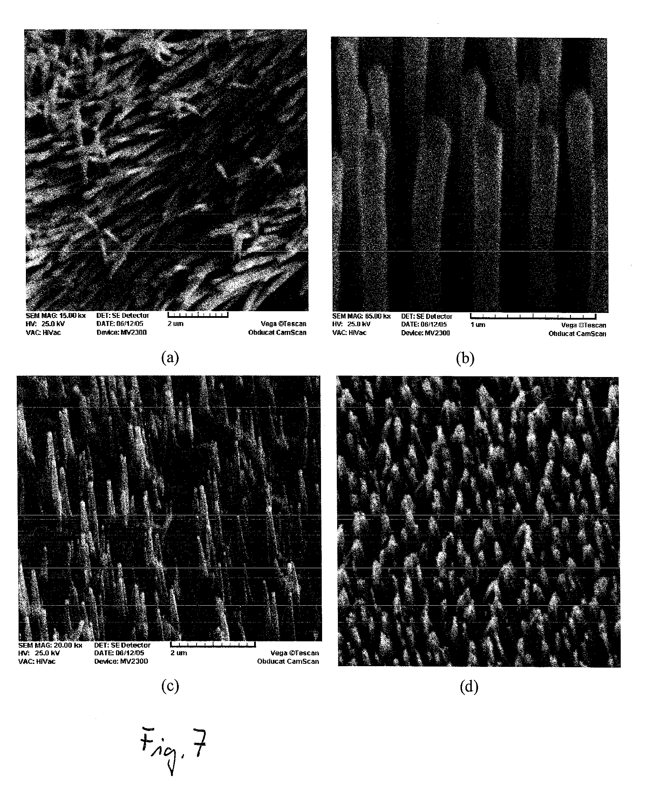

Fig. 7a-7d show SEM (scanning electron microscopy) images of the grown CNTs for this technique. As can be concluded from theses figures both conical and straight vertical nanotubes with widths between 50 to 170nm can be grown. Also depending on the plasma power, the density of the nanotubes can be controlled to give a light or heavy growth. Generally by raising the plasma power, heavier growth of CNTs is possible, as shown in Fig. 7a. Fig. 7b shows a magnified view of vertical CNTs indicating the presence of a nickel seed (nickel stopple) on top of each CNT. As shown in Fig. 7c and 7d, also conical growth of CNT is observed.

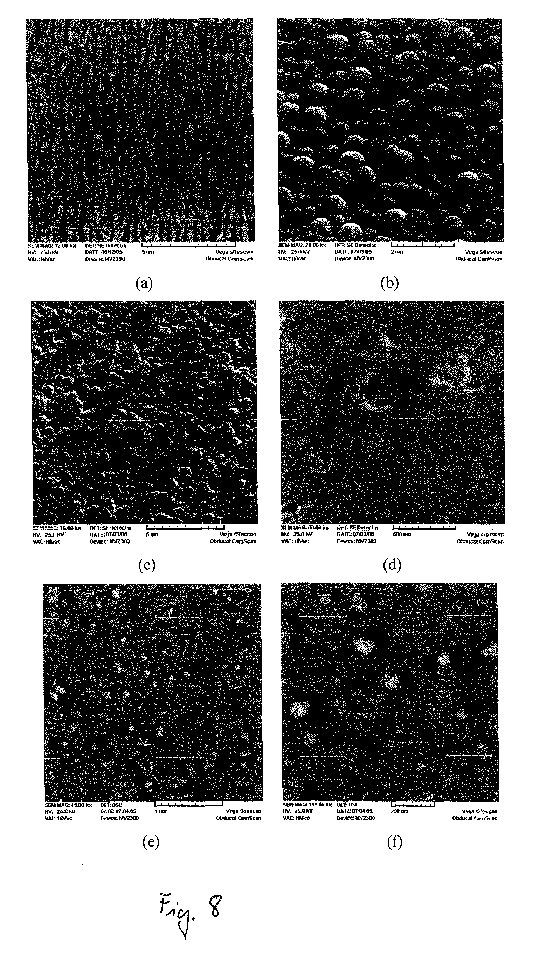

Fig. 8a-8f show several SEM images corresponding to each step of the encapsulation process according to the present invention. Starting with the growth of carbon nanotubes (Fig. 8a) the sample is coated with TiO₂ to form a solid yet rough finish shown in Fig. 8b. The polishing process is very important to make sure that sample surface is smoothened and all roughness is removed. Fig. 8c shows the sample surface after performing the polishing step. As can be seen with a higher magnification (compare Fig. 8d), before ashing the surface of the insulating layer shows no observable features. However, once the ashing step is accomplished, the carbon sites are burned and small holes are observed in the surface of the insulating layer, as shown in Fig. 8e. These holes or recessions are formed at the sites of the CNTs. The shadows in Fig. 8f clearly show the recessions in the surface of the insulating layers as a result of burning the front end of the CNTs.

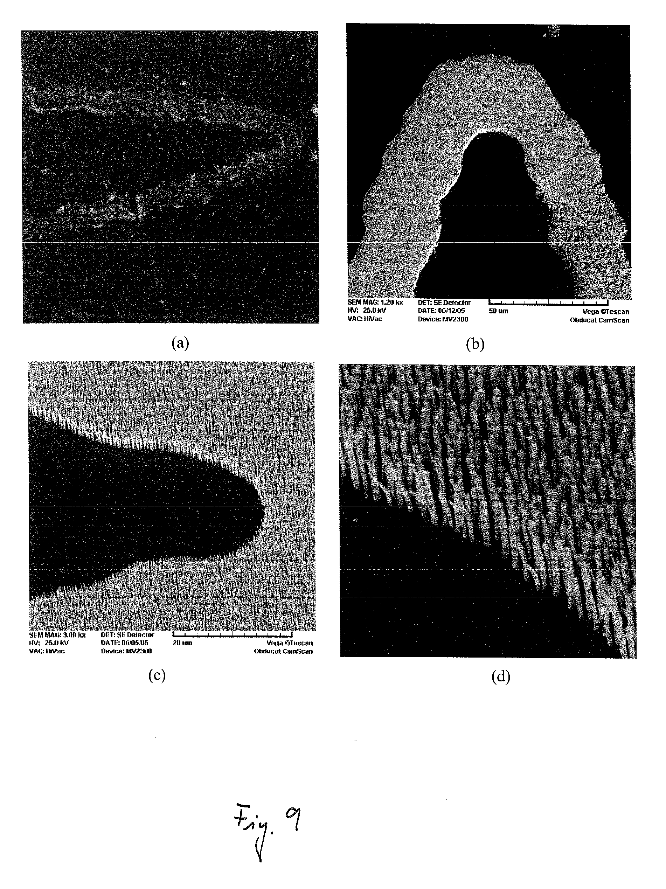

As shown in Fig. 5a, in a method according to another aspect of the present invention the CNTs 2 are deposited on a metallic seed layer 15, formed e.g. of nickel. Alternative materials for the seed layer are e.g. cobalt (Co) and iron (Fe). Such a seed layer can be patterned and coated with CNTs in the conventional manner, e.g. using photolithography techniques, as summarized in Fig. 9a-9d. More specifically, referring to Fig. 9a a parabolic pattern of a Ni-seed layer coated with CNTs is provided on the surface of an N-type silicon substrate. The formation of such patterns is possible by micro-lithography of the nickel seed layer prior to the growth of CNT's. Fig. 9a shows an overall optical view of the parabolic structure on the silicon substrate, which may find applications e.g. in optical communication. Fig. 9b shows the SEM image of the same sample and Fig. 9c shows the SEM image with a better view at the boundary of the grown CNTs, evidencing a vertical and well-aligned growth. The SEM image at higher resolution of Fig. 9d shows how CNTs are placed side by side in a substantially random fashion. Such a patterned CNT emitter can be used e.g. to write a pattern onto a surface of another substrate in a single step, i.e. by enabling electron emission from all CNTs of the parabolic structure.

Referring to Fig. 5a-5h, a process according to another embodiment of the present invention will be described for reducing the total number of CNTs disposed on the metallic seed islands on the substrate. Even providing a singular, isolated CNT on a metallic contact can be accomplished by this method.

As shown in Fig. 5a, the process starts with patterning a metallic seed layer, in particular of Nickel, on the surface of substrate 15 by standard photolithography in order to provide a plurality of discrete metallic seed portions spaced apart from each other. E.g. for providing an FED, the metallic seed portions 15 can be arranged in a matrix-like pattern on the surface of substrate 1. As a next step, CNTs 2 are deposited on the surface of the metallic seed portions 15, e.g. in a PECVD reactor. Depending on the dimensions of the initial metallic seed portions 15, a limited number of CNTs are grown on the substrate.

As shown in Fig. 5b, the grown CNTs 2 are then encapsulated by an insulating layer 3, which is then polished in order to expose the front ends of the CNTs. Finally, recessions are formed in the insulating layer 3 at the sites of the CNTs by an ashing process as described above. In this way, several CNT emitters spaced apart from each other are formed on the surface of substrate 1, as shown in Fig. 5b.

As shown in Fig. 5c, such CNT emitters are then used as electron beam writers in the manner as described with reference to Fig. 1a above in order to expose another substrate 4 with a photoresist coating 5 provided on the surface thereof. During exposure, the substrates 1, 4 are not moved relative to each other so that the photoresist is patterned at sites directly corresponding to the sites of the CNTs of the CNT emitter. More specifically, it has been observed that a plurality of smaller patterned photoresist portions can be formed on the surface of substrate 4, as shown in Fig. 5d. The conical shape of CNT emitters has been identified as a probable reason for the reduction of the size of the patterned photoresist portions on the surface of the other substrate 4. At the sites of the patterned photoresist portions, another metallic seed layer, e.g. of Nickel, is deposited in order to form metallic seed portions of reduced size on the surface of the other substrate.

In the manner, as described with reference to Fig. 5a and 5b, CNT emitters are formed on the resulting metallic seed portions, as shown in Fig. 5e and 5f. As shown in Fig. 5g, the resulting CNT emitters are again used for patterning the photoresist layer 5 on the surface of another substrate 4. As indicated by the dots, these processes are repeated until single standing isolated CNTs or CNT arrays consisting of only a few CNTs are formed on the surface of a semiconductor substrate 1, as shown in Fig. 5h.

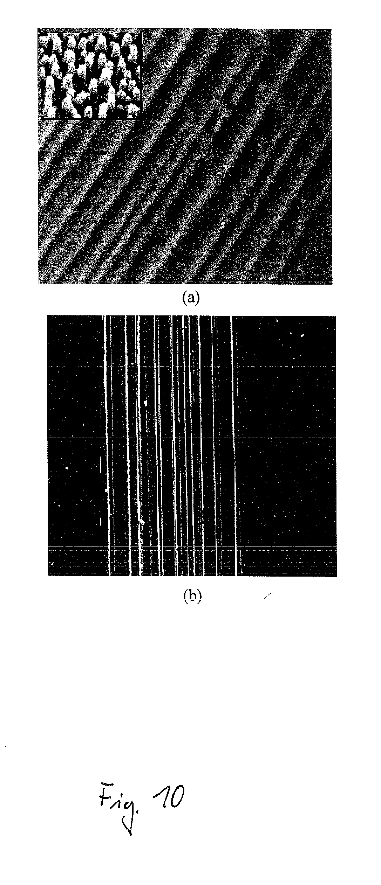

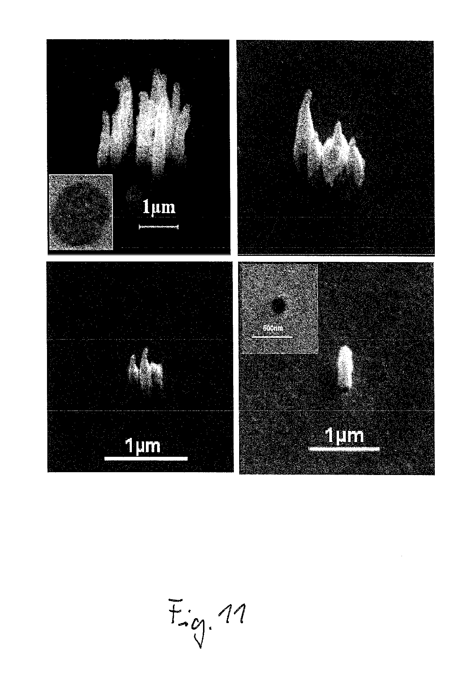

Fig. 11a-11d show the SEM images corresponding to several steps of the above refinement procedure indicating how the growth of CNTs in patterned structures will lead to the growth of single isolated nanotubes. Insets in the initial and final steps of refinement process are included to show the trace of the beam exposure on the resist-coated substrate. The former case corresponds to an exposure by a cluster of electron beam sources (CNTs), while the latter case shows the effect of an isolated nanotube as a single beam source.

As explained with reference to Fig. 1b above, a gate is used for controlling electron emission from a single CNT or a CNT emitter array. The electrical characteristics of the encapsulated structure are an important parameter on the level of control on the emission of electrons onto the opposite substrate and the quality and fmeness of the patterns that can be generated. Fig. 6a and 6b summarize the electrical behaviour of the emission current with respect to the anode-cathode voltage. By raising the anode-cathode voltage, a higher current is expected and this effect is observed in the top part of Fig. 6a. Fig. 6b shows the critical effect of the gate voltage on the emission current of each individual CNT. As can be seen, by increasing the gate voltage from 5 to 12 volts, the emission current drops with more than one order of magnitude. To better highlight this controlling effect, the same characteristics have been plotted in a semi-log scale in which the emission current is plotted in a logarithmic scale whereas the gate voltage is linearly plotted. This graph clearly shows the deep influence of the gate voltage on the emission current between anode and cathode. This mechanism is self-integrated in the structure by means of the metal-insulator bilayer deposited on the grown nanotubes. The use of such a bi-layer is very beneficial. Conventionally, a nanolithography tool was used to create a so-called gate to control the emission from each individual emitter. According to the present invention, however, the formation of the gate is inherent and just requires a mechanical polishing step without the need of nano-lithography to form the gate.

As explained above, in order to generate line structures, a relative movement in one dimension between the CNT emitter and the substrate to be patterned is induced, e.g. using a one-dimensional positioning stage. Fig. 10a shows a SEM image, where CNTs randomly grown on a substrate with no specific pattern are moved relative to the resist-coated substrate. Thus, the lines are formed in a random yet parallel order. The inset in this image corresponds to the SEM image of processed CNTs. The lines have typical widths of the order of 120nm-150nm. By patterning the nickel seed layer prior to the growth of nanotubes, one can draw lines in a smaller area as seen in Fig. 7b. For this sample, round nickel islands have been generated using standard photo-lithography.

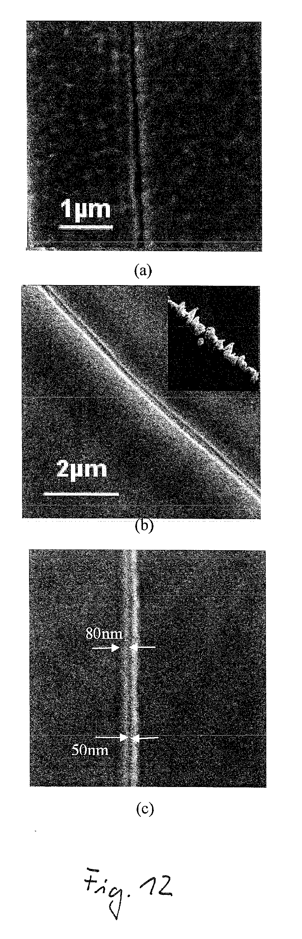

Using the refinement process described above with reference to Fig. 5 CNT emitters of single isolated CNTs can be produced. These CNT emitters can be used in order to draw well-defined lines. Fig. 12 shows several SEM images of the drawn lines with widths varying between 50 and 150nm. Fig. 12a shows the SEM image corresponding to a line drawn on the resist-coated substrate with a width of 80nm. Fig. 12b shows a thicker line with 150nm width after the resist has been removed and subsequent nickel layer has been patterned using the lift-off process. The inset in this figure presents the SEM image of the similar line after it has been placed in the PECVD reactor and carbon nanotubes have been grown on the patterned nickel line. This image is similar to Fig. 9 where the lithography has been achieved by CNTs as opposed to photolithography and the width of the line is much smaller. Finally, in Fig. 12c one can see the SEM image of two parallel lines with a width of 80nm and a spacing of 50nm drawn with two neighbouring nanotubes. The evolution of two parallel lines indicates the efficacy of this technique to perform writing on a resist-coated substrate in nano-scale regime.

With reference to Fig. 2a and 2b a CNT emitter according to a second embodiment of the present invention will be described that can be used to for writing structures of even smaller width onto a substrate. As shown in Fig. 2a, a CNT emitter is grown on a membrane 7 disposed on the surface of a substrate 1. The membrane can be made of a thin silicon-oxide layer, which is eventually etched away to form a hole with both ends open. Underneath the membrane 7 and the CNT 2 a cavity 9 is formed in the substrate 1, e.g. by etching. As a next step the top side (tip) of the CNT 2 is opened by mechanical polishing.

As shown in Fig. 2b, the bottom of cavity 9 is closed by a plate 11, which can be formed of the same material than substrate 1. The plate 11 comprises a tube-shaped inlet 12 which communicates with a reservoir of particles in a liquid or gaseous phase stage. These particles enter the cavity 9 via the inlet 12. Inside the cavity 9 an ionizing means 10 is provided in order to ionize the particles within the cavity 9. E.g. by placing a small miniaturized plasma source just underneath the membrane, hydrogen gas can be ionized and appropriate voltages applied between the top silicon substrate and the bottom CNT-holding substrate will lead to a flow of hydrogen ions from the bottom towards the top. Thus, ions, e.g. hydrogen ions, are emitted via the front end of CNT 2 towards the opposite substrate 4, as indicated by the dotted ion beam 6 The ions pattern a photoresist 5 coated on the surface of opposite substrate 4. Extensive experiments of the inventors showed that such a CNT ion emitter can be used for writing on an opposite substrate with sizes comparable with the inner diameter of the CNT, that is with sizes below approx. 5-8 nm.

As will become apparent to a person skilled in the art, the CNT emitter according to the present invention can be used in various applications, including field emission displays, nanowriters for modifying surface properties of a substrate, e.g. by exposing a photoresist pattern in the manner of a conventional photolithography process, or as a probe in scanning tunnelling microscopy or as an electron emitter in transmission electron microscopy. For further details of a FED reference is made to US 2005/0112983 A1 and US 2004/0189182 A1 the whole contents of which are hereby incorporated by reference. A further preferred application of the CNTs according to the present invention is in the field nano-printing, particularly the writing of structures of dimensions as low as several nanometers (nm) into or on substrates, as described above. The charged particles emitted can be used to either modify the surface or volume of the substrate directly or indirectly, e.g. by patterning a photoresist for further subsequent processing in the known manner.

While the present invention has been described with reference to particular exemplary embodiments, the description is illustrative of the invention and is not to be construed as limiting the invention. Therefore, various modifications to the present invention can be made to the described embodiments by those skilled in the art without departing from the true spirit and scope of the invention as defined by the appended claims.

## Claims

1. A method of forming a carbon nanotube emitter, comprising the steps of:
providing a substrate (1), in particular a semiconductor substrate;
disposing at least one carbon nanotube (2) on said substrate;
depositing an insulating layer (3) on said substrate such as to encapsulate a respective carbon nanotube; and
connecting said substrate (1) with a source of charged particles for emission of charged particles via a respective carbon nanotube.

2. The method according to claim 1, wherein said substrate (1) is a silicon substrate and said insulating layer (3) is deposited using a chemical vapour deposition technique.

3. The method according to any of the preceding claims, further comprising the steps of:
smoothing or polishing a surface of said insulating layer (3); and
forming recessions in said insulating layer (3) in the sites of said carbon nanotubes (2).

4. The method according to any of the preceding claims, wherein said step of disposing said at least one carbon nanotube (2) comprises the steps of:
depositing a metallic layer (15) on a surface of said substrate (1);
patterning said metallic layer as to form discrete metallic portions on said surface; and
disposing a plurality of carbon nanotubes (2) on said discrete metallic portions.

5. The method according to any of the preceding claims, wherein the step of depositing said insulating layer comprises
depositing a double-layer consisting of a metal layer and an insulator layer and
depositing at least another double-layer on said double-layer, said another double-layer respectively consisting of a metal layer and an insulator layer.

6. The method according to any of the preceding claims, wherein
a step of using said carbon nanotube emitter to pattern a metallic layer (5) on a surface of another semiconductor substrate (4) and
said steps of
disposing a plurality of carbon nanotubes (2) on said discrete metallic portions,
encapsulating said carbon nanotubes as to form another carbon nanotube emitter and
using said another carbon nanotube emitter to pattern a metallic layer on a surface of another semiconductor substrate
are repeated for reducing the number of carbon nanotubes (2) disposed on said discrete metallic portions (15).

7. A carbon nanotube emitter, comprising:
a semiconductor substrate (1); and
at least one carbon nanotube (2) disposed on said substrate and having a free end adapted for emission of charged particles therefrom; wherein
an insulating layer (3) is provided for encapsulating said at least one carbon nanotube (2).

8. The carbon nanotube emitter according to claim 7, wherein
said semiconductor substrate (1) is a silicon substrate and
said insulating layer (3) is polished such that free ends of said carbon nanotubes (2) are exposed on a surface of said insulating layer (3).

9. The carbon nanotube emitter according to claim 8, wherein recessions are formed in said insulating layer (3) in the sites of said carbon nanotubes (2).

10. The carbon nanotube emitter according to any of claims 7 to 9, wherein said carbon nanotubes (2) are disposed on discrete metallic portions (15) on a surface of said substrate (1) for forming a carbon nanotube array.

11. The carbon nanotube emitter according to any of claims 7 to 10, further comprising at least one gate for controlling emission of charged particles via said carbon nanotubes.

12. The carbon nanotube emitter according to any of claims 7 to 11, wherein said substrate (1) forms a cathode for emission of electrons via said carbon nanotubes (2).

13. The carbon nanotube emitter according to any of claims 7 to 12, wherein said insulating layer comprises
a first double-layer consisting of a metal layer and an insulating layer; and
at least another double-layer consisting of a metal layer and an insulating layer.

14. The carbon nanotube emitter according to any of claims 7 to 13, wherein a cavity (9) is formed underneath said at least one carbon nanotube (2), said cavity communicating with a reservoir of particles in a fluid or gaseous phase, wherein a ionization means (10) is disposed within said cavity (9) for ionizing said particles to be emitted from a respective free end of said carbon nanotubes.

15. The carbon nanotube emitter according to any of claims 7 to 14, wherein said substrate (1) is disposed on a one- or two-dimensional positioning stage for displacing said substrate in one or two dimensions.

16. A method of modifying properties of a surface of a substrate (4), wherein a carbon nanotube emitter according to any of claims 7 to 15 is used to emit charged particles causing a modification of said surface properties.

17. A field emission display comprising a carbon nanotube emitter as claimed in any of claims 7 to 15 for emitting charged particles onto phosphorescent pixel elements on a display screen.

18. Use of a carbon nanotube emitter according to any of claims 7 to 15 as an electron emitter for scanning tunnelling microscopy (STM) or transmission electron microscopy (TEM).
